**Europäisches Patentamt**

**European Patent Office**

**Office européen des brevets**

(19)

(11) Veröffentlichungsnummer: **0 098 539**
**A2**

(12) # EUROPÄISCHE PATENTANMELDUNG

(21) Anmeldenummer: 83106401.9

(22) Anmeldetag: 30.06.83

(51) Int. Cl.³: **G 06 F 7/50**

(30) Priorität: 03.07.82 DE 3224885

(43) Veröffentlichungstag der Anmeldung: 18.01.84
Patentblatt 84/3

(84) Benannte Vertragsstaaten: **CH DE FR GB IT LI**

(71) Anmelder: **Merkle, Paul, Eschenbrünnlestrasse 48,
D-7032 Sindelfingen (DE)**

(72) Erfinder: **Merkle, Paul, Eschenbrünnlestrasse 48,
D-7032 Sindelfingen (DE)**

(54) **Serielles Tetraden-Addier-Subtrahierwerk im BCD-8421-Code.**

(57) Gegenstand der Erfindung ist ein serielles elektronisches Tetraden-Addier-Subtrahierwerk im BCD-8421-Code, das von Addition auf Subtraktion und von Subtraktion auf Addition umschaltbar ist und einen Spezial-Tetraden-Addierer-Subtrahierer 1 aufweist, der nur aus 4 Voll-Addierern-Subtrahierern besteht. Auch bei diesem Addier-Subtrahierwerk ist an der Eingangs-Seite des Spezial-Tetraden-Addierers-Subtrahierers 1 eine Umcodierschaltung 2 angeordnet, welche BCD-Zahlen in BCD-plus-6-Zahlen umcodiert und an der Ausgangs-Seite dieses Spezial-Tetraden-Addierers-Subtrahierers 1 eine weitere Umcodierschaltung 3 angeordnet, welche BCD-plus-6-Zahlen in BCD-Zahlen umcodiert. Erfindungsgemäß wird diese Vereinfachung durch eine Spezialschaltung 14 ermöglicht, welche die Leitungswege der Umcodierschaltungen und die Umgehungswege dieser Umcodierschaltungen entsprechend den vorhandenen Anforderungen vor-ansteuert. Erfindungsgemäß wird dadurch vermieden, daß bei Addition mit Übertrag einerseits die Dualzahl LHHL (6) unangestrebt hinzu-addiert wird und dann wieder subtrahiert werden muß, weil auch im Ergebnis-Schieberegister nur BCD-codierte Dezimal-Ziffern gespeichert werden.

ACTORUM AG

Paul Merkle
Eschenbrünnlestr.48
7032 Sindelfingen

0098539

## Serielles Tetraden-Addier-Subtrahierwerk
### im BCD-8421-Code

Gegenstand der Erfindung ist ein serielles elektronisches Tetraden-Addier-Subtrahierwerk im BCD-8421-Code, das im Gegensatz zum vorhergehenden Tetraden-Addier-Subtrahierwerk keinen normalen BCD-Tetraden-Addierer-Subtrahierer aufweist, sondern nur einen dualen Tetraden-Addierer-Subtrahierer, der somit nur aus 4 Voll-Addierern-Subtrahierern besteht. Auch das vorliegende Tetraden-Addier-Subtrahierwerk ist mit zwei Umcodierschaltungen versehen, von denen eine unmittelbar vor dem Tetraden-Addierer-Subtrahierer 1 angeordnet ist und eine unmittelbar hinter dem Tetraden-Addierer-Subtrahierer angeordnet ist. Auch bei diesem Tetraden-Rechenwerk bewirkt die Eingang-seitig angeordnete Umcodierschaltung eine Umcodierung von BCD auf BCD-plus-6 und die Ausgang-seitig angeordnete Umcodierschaltung eine Umcodierung von BCD-plus-6 auf BCD. Die Verwendung eines dualen Tetraden-Addierers-Subtrahierers wird hierbei durch eine Spezial-Steuerschaltung ermöglicht, welche von den vier 4-fachen Stromwegen immer die richtigen Stromwege einschaltet. Bei Addition ohne Übertrag sind beide Umcodierschaltungen zwischengeschaltet. Bei Addition mit Übertrag ist nur die Umcodierschaltung 2 zwischengeschaltet. Bei Subtraktion ohne Übertrag ist keine Umcodierschaltung zwischengeschaltet. Bei Subtraktion mit Übertrag ist nur die Umcodierschaltung 3 zwischengeschaltet. Dieses Rechen-System hat auch den Vorteil, daß alle Ergebniszahlen sofort als vierstellige BCD-Zahlen anfallen und als BCD-Zahlen gespeichert werden, wie beim vorhergehenden Tetraden-Addier-Subtrahierwerk.

Die Type A dieses seriellen Tetraden-Addier-Subtrahierwerks ist in Figur 1 dargestellt. Die Type B dieses seriellen Tetraden-Addier-Subtrahierwerks ist in Figur 2 dargestellt. In Figur 3 ist die BCD--BCD-plus-6-Umcodierschaltung dargestellt. In Figur 4 ist die BCD-plus-6-BCD-Umcodierschaltung darge-

- 2 -                                           0098539

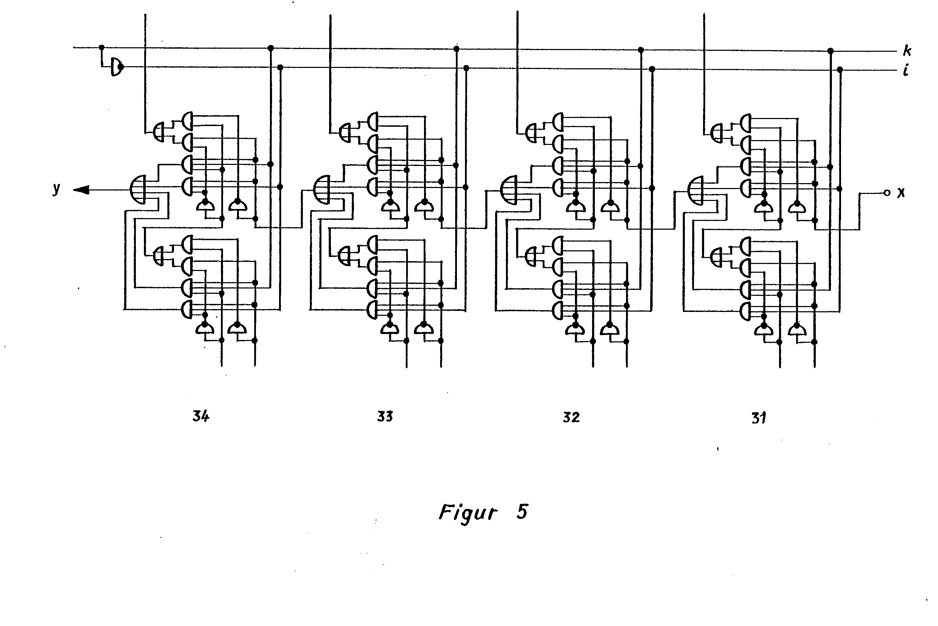

stellt. In Figur 5 ist der duale Tetraden-Addierer-Subtrahierer 1 dargestellt, welcher von Addition auf Subtraktiom und von Subtraktion auf Addition umschaltbar ist.

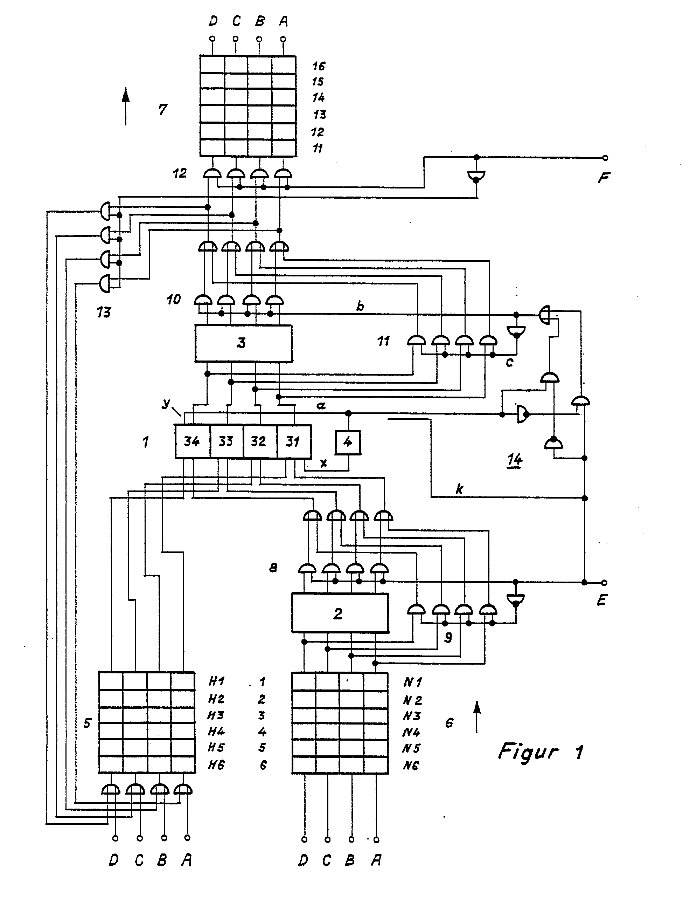

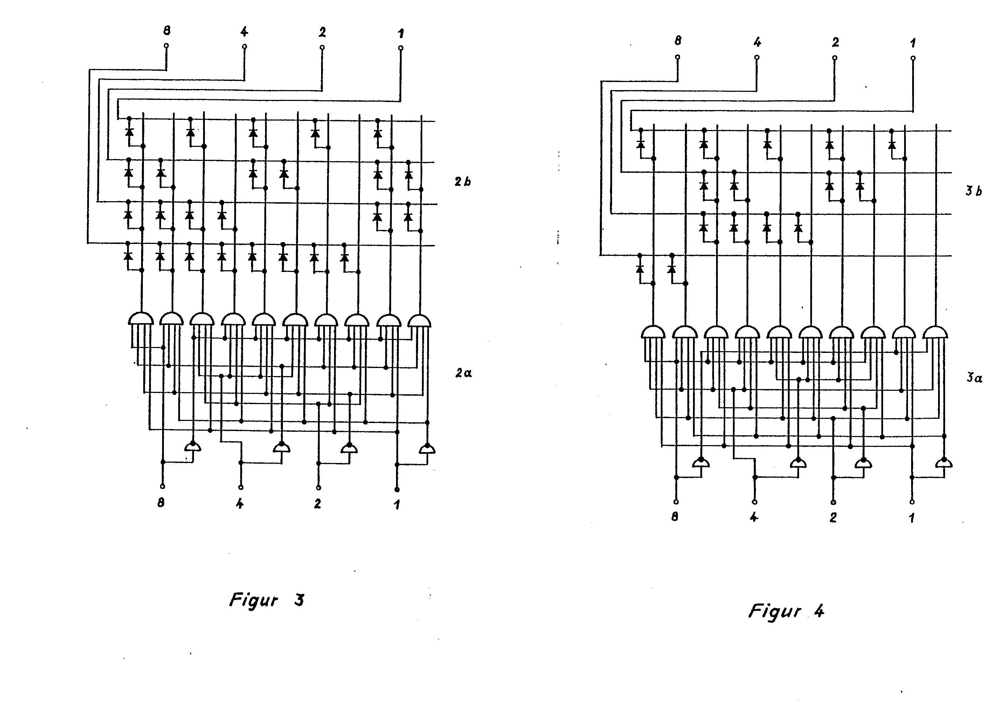

Das serielle Tetraden-Addier-Subtrahierwerk Type A (Figur 1) besteht aus dem umschaltbaren dualen Tetraden-Addierer-Subtrahierer 1 und der BCD--BCD-plus-6-Umcodierschaltung 2 und der BCD-plus-6--BCD-Umcodierschaltung 3 und dem Übertragspeicher 4. Teil 5 ist das Schieberegister I, in welchem beim Addieren der erste Summand BCD-codiert gespeichert ist und in welchem beim Subtrahieren der Minuend gespeichert ist. Teil 6 ist das Schieberegister II, in welchem beim Addieren der zweite Summand BCD-codiert gespeichert ist und in welchem beim Subtrahieren der Subtrahend BCD-codiert gespeichert ist. Teil 7 ist das Ergebnis-Schieberegister III, in welchem die Zeilen-Ergebniszahlen gespeichert werden, sofern die Ergebniszahlen nicht auf das Schieberegister I umgeschaltet sind. Teil 8 ist die vier-fache Tor-Schaltung für die Umcodierschaltung 2 und Teil 9 die vier-fache Umgehungs-Tor-Schaltung für die Umcodierschaltung 2. Teil 10 ist die vier-fache Tor-Schaltung für die Umcodierschaltung 3 und Teil 11 die vier-fache Umgehungs-Tor-Schaltung für die Umcodierschaltung 3. Teil 12 ist die vierfache Tor-Schaltung zum Schieberegister III (7) und Teil 13 die vierfache Rückkoppelungs-Tor-Schaltung zum Schieberegister I (5). Teil 14 ist die Spezial-Steuerschaltung für die Übertrag-abhängige Vor-Ansteuerung der vier-fachen Tor-Schaltungen 10 und 11. Die Steuerleitungen k und i des Tetraden-Addierers-Subtrahierers 1, welcher aus den Voll-Addierern-Subtrahierern 31 bis 34 besteht, sind nur in Figur 5 dargestellt; in Figur 1 ist nur das Anschluß-Stück der Steuerleitung k eingezeichnet. Die Eingänge A haben den Zahlenwert 1 und die Eingänge B den Zahlenwert 2. Die Eingänge C haben den Zahlenwert 4 und die Eingänge D den Zahlenwert 8. Diese Wertigkeit gilt auch für die Ausgänge A bis D von Schieberegister III (7). Die Umcodierschaltung 2 verwandelt vier-stellige BCD-Zahlen in vier-stellige BCD-plus-6-Zahlen (LLHH in HLLH oder LHLH in HLHH usw.). Die Umcodierschaltung 3 verwandelt vierstellige BCD-plus-6-Zahlen in vier-stellige BCD-Zahlen (HLLH in LLHH oder HLHH in LHLH usw.). Die Umcodierschaltung 2 ist in Figur 3 dargestellt und besteht aus dem Eingangsteil 2 a und dem Ausgangsteil 2 b.
Die Umcodierschaltung 3 ist in Figur 4 dargestellt und besteht
aus dem Eingangsteil 3 a und dem Ausgangsteil 3 b.

Die Wirkungsweise des seriellen Tetraden-Addier-Subtrahierwerks Type A (Figur 1) ergibt sich beim Addieren wie folgt:
Zunächst muß dieses Addier-Subtrahierwerk durch Anlegen von H-
Potential an den Eingang E auf Addition eingestellt werden.
Wenn die Additions-Ergebniszahl im Schieberegister 7 (III) gespeichert werden soll, muß außerdem auch der Eingang F an H-
Potential gelegt werden. Damit ist die Torschaltung 8 dauernd
vor-angesteuert und die Torschaltungen 10 und 11 übertrags-
abhängig. Falls der erste Summand bereits im Schieberegister
5 (I) gespeichert ist und der zweite Summand im Schieberegister
6 (II), liegt damit der Zeilen-Summand H 1 von Zeile 1 BCD-
codiert an den entsprechenden Eingängen des Tetraden-Addierers-
Subtrahierers 1 an und der Zeilen-Summand N 1 von Zeile 1 BCD-
plus-6-codiert an den entsprechenden Eingängen des Tetraden-
Addierers-Subtrahierers 1. Damit haben die Ausgänge des Tetraden-Addierers-Subtrahierers 1 BCD-plus-6-codiert die Potentialreihe der Zeilensumme aus H 1 und N 1, wenn der Übertrag-Ausgang y kein H-Potential hat. In diesem Fall ist diese Zeilensumme Übertrag-frei und bewirkt die Spezial-Ansteuerschaltung
14, daß die Steuerleitung b an H-Potential liegt. Damit geht
diese Zeilensumme über die Um-Codierschaltung 3 ins Schieberegister 7 (III), wenn die Schieberegister I, II und III einmal durchgesteuert werden. Hierbei wird dieser Zeilensummand
von BCD-plus-6 auf BCD umcodiert und befindet sich damit BCD-
codiert in Zeile 11 des Schieberegisters III (7). Nun befinden sich die Zeilen-Summanden H 2 und N 2 in Zeile 1, womit
der Zeilen-Summand H 2 BCD-codiert an den entsprechenden Eingängen des Tetraden-Addierers-Subtrahierers anliegt und der
Zeilen-Summand N 2 BCD-plus-6-codiert an den entsprechenden
Eingängen des Tetraden-Addierers-Subtrahierers 1 anliegt. Damit haben die Ausgänge des Tetraden-Addierers-Subtrahierers 1
nur BCD-codiert die Potentialreihe der Zeilensumme aus H 2 und
N 2, wenn hierbei der Übertrag-Ausgang y H-Potential hat. In
diesem Fall bewirkt die Spezial-Ansteuerschaltung 14, daß die
Steuerleitung c an H-Potential liegt. Damit geht diese Zeilensumme über das Tor 11 direkt ins Schieberegister III (7), wenn die Schieberegister I, II und III zum zweiten mal durchgesteuert werden. Die Zwischenschaltung der Umcodierschaltung 3 ist hierbei deshalb nicht erforderlich, weil die Zeilensumme bei Vorliegen eines Übertrages nur noch eine BCD-Zahl ist und somit nicht mehr eine BCD-plus-6-Zahl. Wenn auf diese Weise alle Zeilensummanden erzeugt sind, ist die Summen-Ergebniszahl BCD-codiert im Schieberegister III (7) gespeichert, weil alle drei Schieberegister immer gleichzeitig durchgesteuert werden und weil dabei die Zeilen-Inhalte immer um eine Zeile vorwärts rücken (in Pfeilrichtung). Falls diese Ergebnissumme im leer werdenden Schieberegister I (5) als Summand oder Minuend gespeichert werden soll, muß hierbei der Eingang F an L-Potential gelegt werden.

Beim Subtrahieren ergibt sich die Wirkungsweise dieses seriellen Tetraden-Addier-Subtrahierwerks wie folgt: Zunächst muß dieses Addier-Subtrahierwerk durch Anlegen von L-Potential an den Eingang E auf Subtraktion eingestellt werden. Wenn die Subtraktions-Ergebniszahl im Schieberegister III (7) gespeichert werden soll, muß außerdem auch der Eingang F an H-Potential gelegt werden. Damit ist die Tor-Schaltung 9 dauernd vor-angesteuert und die Tor-Schaltungen 10 und 11 Übertrags-abhängig. Falls hierbei der Minuend bereits im Schieberegister I (5) gespeichert ist und der Subtrahend im Schieberegister II (6), liegt damit der Zeilen-Minuend H 1 von Zeile 1 BCD-codiert an den entsprechenden Eingängen des Tetraden-Addirers-Subtrahierers 1 an und der Zeilen-Subtrahend N 1 von Zeile 1 ebenfalls nur BCD-codiert an den entsprechenden Eingängen des Tetraden-Addierers-Subtrahierers 1. Damit haben die Ausgänge des Tetraden-Addierers-Subtrahierers BCD-codiert die Potentialreihe der Zeilen-Differenz aus H 1 minus N 1, wenn der Übertrag-Ausgang y kein H-Potential hat. In diesem Fall ist diese Zeilen-Differenz Übertrag-frei und bewirkt die Spezial-Ansteuerschaltung 14, daß die Steuerleitung c an H-Potential liegt. Damit geht diese Zeilendifferenz über die Torschaltung 11 direkt ins Schieberegister III (7), wenn die Schieberegister I, II und III einmal durchgesteuert werden. Nun befindet sich der Zeilen-Minuend H 2 und der Zeilen-Subtrahend N 2 in Zeile 1, womit diese beiden BCD-Zahlen an den entsprechenden Eingängen des Tetraden-Addierers-Subtrahierers 1 anliegen. Damit haben die Ausgänge des Tetraden-Addierers-Subtrahierers 1 BCD-plus-6-codiert die Potentialreihe der Zeilen-Differenz aus H 2 minus N 2, wenn hierbei der Übertrag-Ausgang y H-Potential hat. In diesem Fall bewirkt die Spezial-Ansteuerschaltung 14, daß die Steuerleitung b an H-Potential liegt. Damit geht diese Zeilen-Differenz über die Umcodierschaltung 3 ins Schieberegister III (7), wenn die Schieberegister I, II und III zum zweiten mal durchgesteuert werden. Damit wurde der Zahlenwert dieser BCD-plus-6-Zahl um die BCD-Zahl  L H H L  (6)  gesenkt und ist damit die erforderliche Subtraktion der Übertrag-Differenzzahl L H H L (6) beendet. Wenn auf diese Weise alle Zeilen-Differenzen erzeugt sind, ist die Differenz-Ergebniszahl BCD-codiert im Schieberegister III (7) gespeichert, weil alle drei Schieberegister immer gleichzeitig durchgesteuert werden und weil dabei die Zeilen-Inhalte immer um eine Zeile vorwärts rücken (in Pfeilrichtung). Falls diese Differenz-Ergebniszahl im leer werdenden Schieberegister I (5) als Minuend oder Summand gespeichert werden soll, muß hierbei der Eingang F an L-Potential gelegt werden.

Bei der Schieberegister-Durchsteuerung wird immer auch der Übertrag-Speicher 4 durchgesteuert, der auch aus einem Doppel-Flipp-Flopp besteht, wie die Schieberegister-Zellen. Nach jeder Schieberegister-Durchsteuerung hat der Ausgang des Übertrag-Speichers 4 das vorhergehende Übertragpotential, womit dann dieses Potential am Übertrag-Eingang x des Tetraden-Addierers-Subtrahierers 1 anliegt und bei der nächsten Addition oder Subtraktion verarbeitet wird.

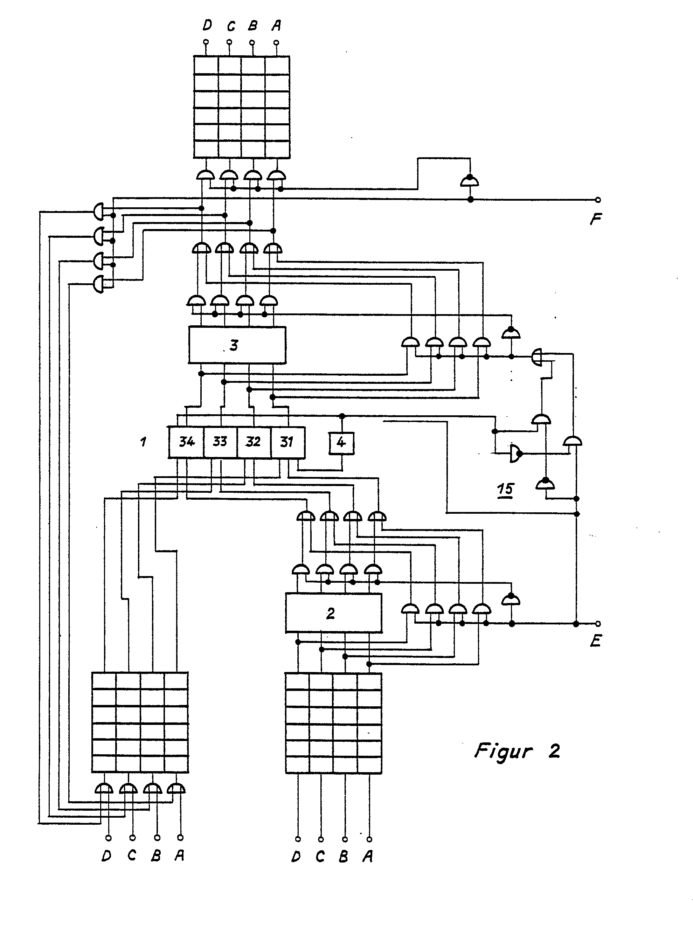

Bei dem seriellen Tetraden-Addier-Subtrahierwerk Type B (Figur 2) wird der Eingang E zum Addieren mit L-Potential angesteuert und zum Subtrahieren mit H-Potential.

Die Schieberegister I, II und III (5 bis 7) sind zwecks Verkürzung der Figuren 1 und 2 nur mit 6 Zeilen dargestellt.

Patentansprüche

1) Serielles elektronisches Tetraden-Addier-Subtrahierwerk im BCD-8421-Code, dadurch gekennzeichnet, daß es als Tetraden-Addierer-Subtrahierer einen Tetraden-Addierer-Subtrahierer aufweist, der nur aus 4 Voll-Addierern-Subtrahierern (34-33-32-31) besteht, die von Addition auf Subtraktion und von Subtraktion auf Addition umschaltbar sind.

2) Serielles elektronisches Tetraden-Addier-Subtrahierwerk nach Anspruch 1, dadurch gekennzeichnet, daß vor dem Tetraden-Addierer-Subtrahierer (1) im Bereich des ersten oder zweiten Schieberegisters (5 oder 6) eine Umcodierschaltung (2) angeordnet ist, welche die vier-stelligen BCD-Zahlen in vier-stellige BCD-plus-6-Zahlen umwandelt und daß zu dieser Umcodierschaltung eine Umgehungs-Schaltung (9) parallel geschaltet ist.

3) Serielles elektronisches Tetraden-Addier-Subtrahierwerk nach Anspruch 1 und 2, dadurch gekennzeichnet, daß hinter dem Tetraden-Addierer-Subtrahierer (1) auch eine Umcodier-Schaltung (3) angeordnet ist, welche die vier-stelligen BCD-plus-6-Zahlen in vierstellige BCD-Zahlen umwandelt, und daß zu dieser Umcodierschaltung (3) eine Umgehungsschaltung (11) parallel geschaltet ist.

4) Serielles elektronisches Tetraden-Addier-Subtrahierwerk nach Anspruch 1 bis 3, dadurch gekennzeichnet, daß beim Addieren ohne Tetraden-Übertrag beide Umcodierschaltungen (2 und 3) zwischengeschaltet sind.

5) Serielles elektronisches Tetraden-Addier-Subtrahierwerk nach Anspruch 1 bis 4, dadurch gekennzeichnet, daß beim Addieren mit Tetraden-Übertrag nur die erste Umcodierschaltung (2) zwischengeschaltet ist und daß im hinteren Bereich der direkte Übergang vor-angesteuert ist.

6) Serielles elektronisches Tetraden-Addier-Subtrahierwerk nach Anspruch 1 bis 5, dadurch gekennzeichnet, daß beim Subtrahieren ohne Tetraden-Übertrag keine der beiden Umcodierschaltungen (2 oder 3) zwischengeschaltet ist und daß im vorderen und hinteren Bereich der direkte Übergang vor-angesteuert ist.

7) Serielles elektronisches Tetraden-Addier-Subtrahierwerk nach Anspruch 1 bis 6, dadurch gekennzeichnet, daß beim Subtrahieren mit Tetraden-Übertrag nur die zweite Umcodier-schaltung (3) zwischengeschaltet ist und daß im vorderen Bereich der direkte Übergang vor-angesteuert ist.

8) Serielle elektronische Tetraden-Addier-Subtrahierwerke nach Anspruch 1 bis 7, dadurch gekennzeichnet, daß deren Sonderausführungen vor dem Tetraden-Addierer-Subtrahierer zwei Umcodier-Schaltungen aufweisen, welche die Zeilensummen Anteil-weise auch um die BCD-Zahl  L H H L  (6) erhöhen, wenn die Zwischenschaltung dieser beiden Umcodier-schaltungen vor-angesteuert ist.

Figur 1

Figur 2

Figur 3

Figur 4

3/4

0098539

Figur 5

k

i

y

x

34        33        32        31

0098539